# FASCICULE DE BREVET EUROPEEN

(11) **EP 4 292 962 B1**
(45) Date de publication et mention de la délivrance du brevet: **11.12.2024**
(21) Numéro de dépôt: 23179372.0
(22) Date de dépôt: 14.06.2023
(51) Int. Cl.: B65G 47/82, B65G 49/00, B65G 47/76, B23Q 7/12

(54) **RÉCUPÉRATEUR DE PIÈCES EN SORTIE DE MACHINE-OUTIL**
VORRICHTUNG ZUM SAMMELN VON TEILEN IM AUSGANG EINER WERKZEUGMASCHINE
WORKPIECE RETRIEVAL DEVICE AT THE OUTPUT OF A MACHINE TOOL

(30) Priorité: 15.06.2022 FR 2205805
(43) Date de publication de la demande: 20.12.2023
(73) Titulaire: Etude réalisations representations industrielles et commerciales, 74950 Scionzier (FR)
(72) Inventeur: BOURSEAU, Laurent, 74800 LA-ROCHE-SUR-FORON (FR)
(74) Mandataire: Cabinet Laurent & Charras

(56) Documents cités:
- CN-A- 106 743 457
- CN-A- 107 380 872
- US-A1- 2002 125 101

## Description

### Domaine technique

La présente invention concerne le domaine de l'optimisation de la productivité de machines-outils, notamment la gestion des pièces en sortie d'une telle machine-outil. Plus particulièrement, les pièces usinées de taille modeste, pouvant être convoyées par bande sont ici principalement concernées.

Les machines-outils sont partie intégrante de la production en séries de pièces par usinage. Notamment, une machine-outil peut produire en continu et à des cadences potentiellement élevées des pièces usinées.

Les pièces sont par exemple des vis, des écrous, des roues d'engrenages, des tiges, etc. Une machine-outil produit de façon automatisée les pièces avec une cadence prédéterminée, généralement de l'ordre de quelques secondes entre chaque pièce. Les pièces usinées doivent ensuite être réparties en lots pour leur empaquetage et expédition, ou pour un traitement ultérieur.

### Art antérieur

On connaît à cette fin les dispositifs connus sous le nom de « séparateurs » qui séparent le flot continu de pièces en sortie d'une machine-outil en lots d'un nombre prédéterminé, dans des réceptacles tels que des paniers standardisés. Les lots sont ensuite manipulés et empaquetés pour expédition ou stockage.

Pour la répartition des pièces entre plusieurs réceptacles remplis en parallèle, on connaît l'utilisation d'aiguilleurs disposés sur un convoyeur à bandes. Les pièces sont déposées sur la bande du convoyeur en sortie de la machine-outil qui les produit.

Les aiguilleurs comportent une surface d'arrêt inclinée, contre laquelle le mouvement du convoyeur vient appuyer les pièces. Le convoyeur exerce par frottements une force dans la direction d'avancée des pièces qui, en temps normal, glissent latéralement hors du convoyeur le long de la surface d'arrêt inclinée.

Un problème survient lorsque les pièces présentent une forme générale tubulaire ou sphérique. En effet, les pièces peuvent alors se présenter contre la surface d'arrêt inclinée avec une orientation qui fait qu'elles roulent sur la bande du convoyeur. Leur éjection sur le côté de la bande n'est alors plus garantie, notamment leur éjection avant que la pièce suivante du flot ne se présente au niveau de l'aiguilleur.

Il peut en résulter une répartition inégale et imprévisible des pièces entre les lots. Les documents CN106743457, sur lequel se base le préambule de la revendication 1, US2002/125101 et CN107380872 décrivent des séparateurs, présentant des mécanismes de séparation compliqués et volumineux. Ainsi, il existe un besoin pour un séparateur permettant de gérer les pièces, notamment celles avec des propriétés leur permettant de rouler, en sortie d'une machine-outil et présentant moins d'erreurs de répartition des pièces entre les lots.

### Exposé de l'invention

Afin de répondre à ce besoin, l'invention propose un séparateur de pièces configuré pour réceptionner et séparer des pièces en sortie d'une machine-outil, comprenant :
- un convoyeur à bande, sur lequel sont réceptionnées les pièces en sortie de la machine-outil,
- au moins deux emplacements pour des réceptacles dans lesquels sont destinées à être réparties les pièces réceptionnées,
caractérisé en ce qu'il comporte au moins un éjecteur, comportant :
* au moins un étrier avec deux parois latérales sensiblement longitudinales et perpendiculaires au convoyeur à bande,
* des actionneurs, configurés pour translater l'étrier transversalement entre une position de repos centrale, dans laquelle les parois latérales de l'étrier sont situées de part et d'autre de la bande du convoyeur, et deux positions d'éjection, dans lesquelles l'étrier est situé latéralement hors de l'aplomb de la bande du convoyeur, de sorte à entraîner au moyen de ses parois latérales une pièce lors de sa translation entre la position de repos et une position d'éjection, et à éjecter la pièce sur le côté de la bande du convoyeur,
les pièces éjectées d'un côté de la bande du convoyeur pouvant être collectées dans l'un des réceptacles, les pièces éjectées de l'autre côté de la bande du convoyeur pouvant être collectées dans l'autre réceptacle.

Le séparateur ainsi obtenu est compact dans le sens longitudinal, et peut traiter des pièces arrondies sans craindre qu'elles ne roulent sans se déplacer.

Le séparateur peut en outre présenter une ou plusieurs des caractéristiques suivantes, prises seules ou en combinaison.

Le séparateur peut comporter une pluralité d'étriers, disposés en série le long de la bande du convoyeur, chaque étrier pouvant être associé à une paire de réceptacles différents.

La compacité longitudinale du séparateur est alors encore plus importante par rapport à l'art antérieur.

Les actionneurs peuvent comporter :
un chariot, mis en mouvement de translation transverse par un moteur électrique,
une pluralité d'électroaimants portés par le chariot,
un électroaimant par étrier,
une unité de contrôle, configurée pour alimenter sélectivement les différents électroaimants,
chaque électroaimant passant, lors d'une translation du chariot au-dessus d'un étrier,
les étriers comportant, chacun, sur leur extrémité supérieure un organe magnétique configuré pour interagir avec l'électroaimant du chariot passant au-dessus de l'étrier lorsque celui-ci est alimenté.

Cet actionnement permet de s'affranchir d'une alimentation en air compressé par rapport aux pistons pneumatiques, et permet de limiter les contraintes inertielles exercées sur les éléments tels que le chariot et les étriers.

Le chariot peut être mis en mouvement au moyen d'une came, mise en rotation au moyen du moteur, présentant un sillon périphérique, et le chariot comportant un doigt, entrant en prise avec le sillon périphérique, et des rails, limitant le mouvement du chariot à une translation transverse.

Seule une alimentation électrique est alors requise.

Le séparateur peut comporter au moins un détecteur de pièce situé au niveau de la bande du convoyeur, en amont d'un des étriers.

Le risque qu'une pièce roule sur le convoyeur et puisse ainsi échapper à la séparation par les étriers est réduite.

Le chariot ou les étriers peuvent comporter des moyens de centrage, configurés pour entrer en prise avec les étriers lorsqu'ils sont en position de repos.

Les moyens de centrage peuvent comporter des détecteurs pistons, qui portent un doigt élastiquement contraint, entrant en prise avec un retrait des étriers ou du chariot lorsqu'ils sont en position centrale de repos.

Les moyens de centrage peuvent comporter des doigts élastiquement contraints par des ressorts, qui entrent en prise avec un retrait des étriers ou du chariot lorsqu'ils sont en position de repos.

En effet, la position centrale doit être régulièrement adoptées pour une gestion optimale du couplage entre les étriers et le chariot.

Les parois latérales des étriers comportent avantageusement une surface de contact avec les pièces en matériau polymère.

Les pièces subissent alors moins de chocs pouvant nuire à leur usinage.

Notamment, les parois latérales des étriers peuvent être réalisées sous forme de plaque à base d'un matériau polymère, attachées de façon interchangeable à une embase des étriers.

Les plaques formant les parois latérales sont en effet des pièces d'usure, qui doivent être régulièrement remplacées.

Les parois latérales des étriers peuvent être disposées inclinées par rapport à la direction longitudinale, avec un angle compris entre 1 et 10°, plus particulièrement entre 3 et 5°, et se rapprochant dans le sens de progression de la bande du convoyeur, de sorte à recentrer une pièce passant à travers l'étrier.

On évite ainsi les chances que les pièces ne se coincent contre les parois latérales de l'étrier suivant dans le sens de progression.

Le séparateur peut comporter, à l'extrémité aval du convoyeur à bande, une sortie avec au moins un réceptacle terminal.

Le réceptacle terminal peut être un récupérateur d'échantillons pour évaluation des pièces, dans lequel une pièce par lot est réceptionnée, chaque lot correspondant à un des réceptacles associés aux réceptacles, en particulier pour subir des tests de qualité.

### Brève description des figures

D'autres caractéristiques et avantages de la fixation selon l'invention apparaîtront à la lecture de la description détaillée des figures ci-après, figures parmi lesquelles :
La figure 1 est une représentation en vue de côté d'un séparateur de pièces selon l'invention,
La figure 2 est une représentation en vue de côté de l'éjecteur du séparateur de la figure 1,
La figure 3 est une représentation schématique en perspective d'un étrier de l'éjecteur et de la bande de convoyeur,
La figure 4 est une représentation schématique en vue de face de l'étrier et du chariot de l'éjecteur,
La figure 5 est une représentation schématique en vue de dessus de l'étrier et de moyens de centrage de celui-ci,
La figure 6 est une représentation schématique en vue de dessus de l'étrier avec un mode de réalisation alternative de moyens de centrage,
La figure 7 est une vue de dessous d'un étrier avec des parois latérales inclinées.

### Description détaillée des figures

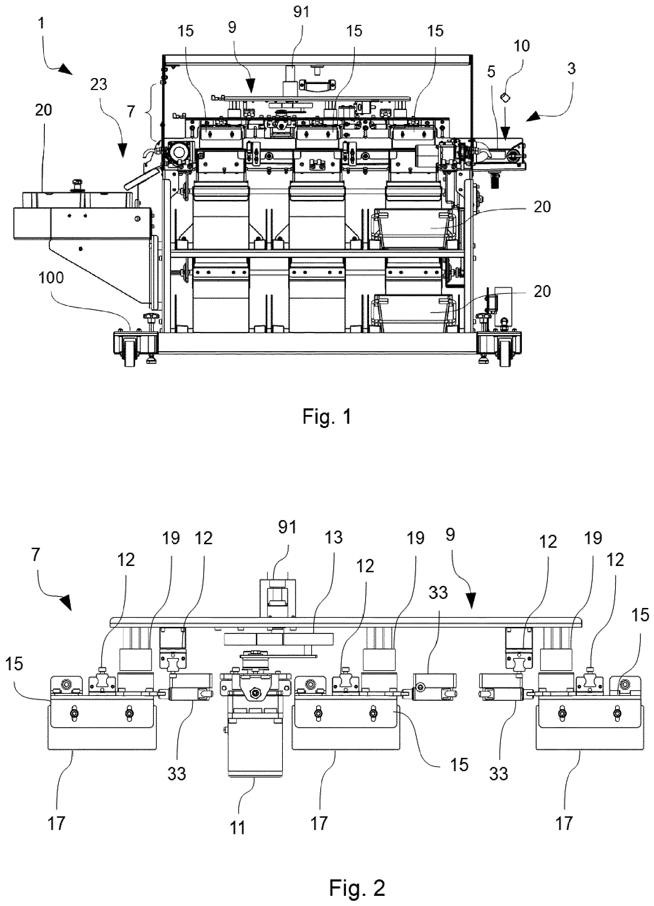

La figure 1 est une vue de côté d'un séparateur 1 de pièces 10 en sortie d'une machine-outil (non représentée).

Le séparateur 1 comporte une entrée 3, se présentant sous forme de cône récepteur dans lequel tombent, à intervalle régulier, des pièces 10 issues de la machine-outil. Les pièces 10 sont par exemple des pièces décolletées, tournées ou fraisées en usinage assisté par ordinateur. En particulier, les pièces 10 peuvent présenter une forme arrondie, tubulaire, conique ou sphéroïde, qui peut rendre difficile leur convoyage et répartition automatisée dans des lots.

Les pièces 10 sont guidées par gravité sur un convoyeur à bande 5, qui convoie les pièces 10 vers un éjecteur 7.

Pour l'orientation, la bande du convoyeur à bande 5 donne une direction longitudinale. La verticale est donnée par la gravité en considérant le convoyeur à bande 5 à plat. La troisième direction correspond à la direction transverse.

L'éjecteur 7 est montré plus en détail en figure 2.

Le séparateur 1 comporte une pluralité de réceptacles 20, par exemple des paniers, qui sont disposés dans des emplacements dédiés, avec des moyens de fixation réversibles. Les pièces 10 séparées par le séparateur 1 sont acheminées jusqu'aux réceptacles 20. Lorsqu'un réceptacle 20 a reçu un nombre prédéterminé de pièces 10, formant ainsi un lot de pièces 10, le séparateur 1 commence à remplir un autre réceptacle 20 il est retiré du séparateur 1.

Le châssis 100 du séparateur 1 est mobile, notamment équipé avec des roulettes pour pouvoir plus aisément être positionné en sortie d'une ou plusieurs machines-outils différentes.

Le châssis 100 comporte en outre des moyens de réglage en hauteur pour s'adapter à la hauteur de la sortie des pièces de la machine-outil.

L'éjecteur 7 comporte un chariot 9, mis en mouvement en translation transverse par un moteur électrique 11 et une came 13, ici en particulier une came à sillon ovale. Le chariot 9 comportant un doigt 91, entrant en prise avec le sillon ovale, et des rails 12, contraignant le mouvement du chariot 9 à une translation transverse. En alternative non représentée, la forme de la came 13 peut être choisie de toute autre forme pour assurer une cinématique optimisée du chariot 9 lors de la rotation du moteur 11.

Des étriers 15 sont disposés sous le chariot 9. Les étriers 15 présentent une section en U avec deux parois latérales 17 longitudinales transverses, avec un écart transverse entre elles correspondant à la largeur de la bande du convoyeur à bande 5. Les étriers 15 sont mobiles entre une position de repos centrale, et deux positions d'éjection, dans lesquelles les parois de l'étrier sont situées de part et d'autre de la bande du convoyeur, et deux positions d'éjection, dans lesquelles les étriers 15 sont latéralement hors de la bande du convoyeur 5.

Des conduites font que les pièces 10 éjectées d'un côté de la bande du convoyeur 5 tombent dans un premier réceptacle 20, tandis que les pièces 10 éjectées de l'autre côté tombent dans un deuxième réceptacle 20.

À chaque étrier 15 est ainsi associée une paire de réceptacles 20. Avec trois étriers 15, le mode de réalisation des figures 1 et 2 peut donc répartir les pièces 10 dans six réceptacles. D'autres modes de réalisation peuvent comporter plus ou moins d'étriers 15, et ainsi prendre en charge un nombre correspondant et différent de réceptacles.

Les parois latérales 17 des étriers se présentent sous forme de plaques de matériau polymère, fixées au moyen de vis dans des fentes d'une embase des étriers 15. La fente est verticale. La hauteur du bord inférieur des parois latérales 17 est alors réglable, et les parois latérales 17 sont alors rapidement et aisément interchangeables.

Le bord inférieur des parois latérales 17 est notamment à une distance de la bande du convoyeur 5 inférieure à la plus petite dimension extérieure des pièces 10.

Ainsi, l'étrier 15 entraîne au moyen de ses parois latérales 17 une pièce 10 lors de sa translation entre la position de repos et une position d'éjection, de façon à éjecter la pièce 10 sur le côté de la bande du convoyeur 5.

La translation de l'étrier 15 étant rapide, les parois latérales 17 et les pièces 10 sont susceptibles de s'entrechoquer violemment. Les parois latérales 17 en matériau polymère absorbent les chocs, et se déforment au lieu de la pièce 10 et sans les endommager.

Les pièces 10 peuvent notamment être usinées avec des tolérances très faible ou des états de surface sensibles aux dégradations. Les parois latérales 17 en matériau polymère assurent que lesdites pièces 10 ne sont pas dégradées par l'étrier 15.

En alternative, seule la surface de contact, intérieure, des parois latérales 17 peut être recouverte d'une couche de matériau polymère.

Le chariot 9 et les étriers 15 comportent des moyens de couplage sous forme d'électroaimants 19 portés par le chariot 9 et les étriers 15. En alternative, l'un du chariot 9 ou des étriers 15 peut comporter des aimants permanents, notamment néodymes. Selon une autre variante, les étriers 15 peuvent porter un élément ferromagnétique attiré par les électroaimants 19 du chariot 9.

Les électroaimants 19 portés par le chariot 9 passent, lors du mouvement en translation transverse dudit chariot 9, au-dessus des aimants ou électroaimants 19 portés par les étriers 15, sur la partie supérieure desdits étriers 15.

Une unité de contrôle (non représentée) alimente sélectivement les électroaimants 19 pour coupler sélectivement le mouvement du chariot 9 et d'un ou plusieurs des étriers 15, lorsqu'une pièce 10 arrive sur le convoyeur à bande 5 au niveau du ou des étriers 15 considérés. L'unité de contrôle dispose notamment d'un ensemble d'interrupteurs statiques ou transistors pour arrêter ou laisser passer du courant électrique dans les électroaimants 19.

Ainsi, le chariot 9 peut faire des mouvements de va-et-vient en continu, et les étriers 15 ne suivent le mouvement du chariot 9 que si les électroaimants 19 correspondants sont alimentés.

Le moteur électrique 11 n'a alors pas ou moins à être inversé dans son sens de fonctionnement, ce qui limite les risques d'endommager soit le moteur 11 soit la came 13 si l'inertie du chariot 9 et des étriers 15 est trop importante, notamment si une cadence élevée implique des mouvements rapides du chariot 9.

D'autres modes de réalisation prévoient par exemple que les électroaimants 19 et le chariot 9 soient remplacés par des actionneurs de type pistons, deux par étrier 15, orientés transversalement et en opposition.

Les pistons peuvent être électromagnétiques ou pneumatiques.

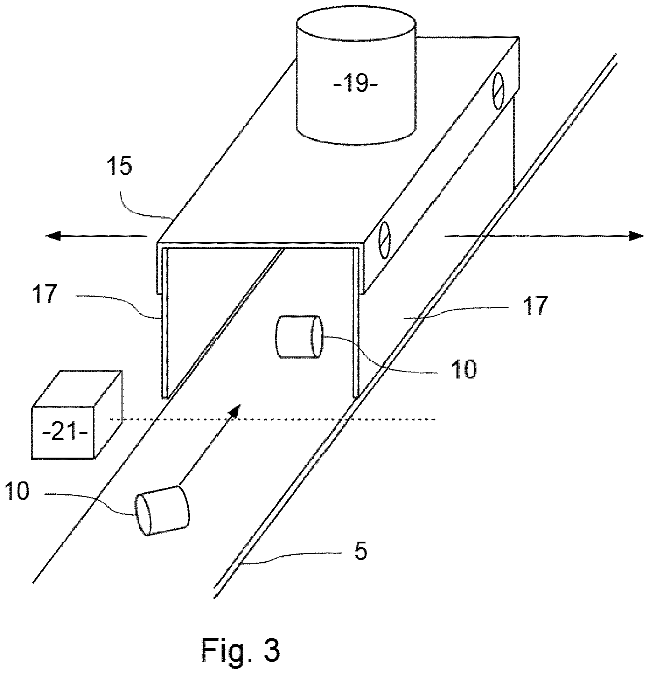

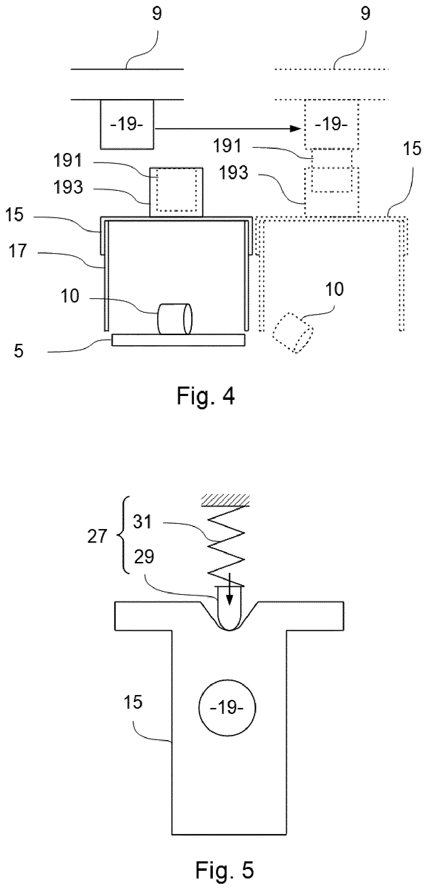

Les figures 3 et 4 montrent plus en détail un étrier 15 et son fonctionnement.

La figure 3 montre le convoyeur à bande 5 acheminant des pièces 10, ici sommairement représentées sous forme de cylindres, par exemple des pièces de roulement.

Les pièces 10 avancent sur la bande du convoyeur 5. Au cas où les pièces 10 rouleraient sur la bande du convoyeur 5, présentant ainsi une vitesse totale non contrôlée, des détecteurs 21 sont disposés en amont de chacun des étriers 15, au niveau de la bande du convoyeur 5.

Ces détecteurs 21 sont par exemple des détecteurs optiques à faisceau interrompu par le passage d'une pièce 10. En alternative, si les pièces 10 sont métalliques et suffisamment massives, les détecteurs 21 peuvent être des détecteurs capacitifs ou magnétiques.

Le chariot 9, non représenté en figure 3 mais présent en figure 4, fait des va-et-vient au-dessus de l'étrier 15. Lorsqu'une pièce 10 est détectée, et si la pièce 10 détectée doit être acheminée dans un des réceptacles 20 associés à l'étrier 15 considéré, l'unité de contrôle alimente l'électroaimant 19 du chariot et/ou de l'étrier 15 pour coupler leur mouvement.

L'étrier 15 est alors entraîné en translation transverse, et ses parois latérales 17 poussent la pièce 10 transversalement hors de la bande du convoyeur 5.

En alimentant l'électroaimant 19 lorsque le chariot 9 est en train de se translater dans la direction voulue, la pièce 10 peut être éjectée spécifiquement d'un côté de la bande du convoyeur 5 ou de l'autre.

En figure 4, l'étrier 15 représenté présente un élément magnétique télescopique 191 sur sa face supérieure. L'élément magnétique télescopique 191 est par exemple un élément ferromagnétique ou un aimant permanent, pouvant se translater verticalement dans une embase annulaire 193.

Le chariot 9 et l'étrier 15 sont représentés en traits pleins à l'état non-couplés par l'électroaimant 19, et en pointillés à l'état couplés, avec l'étrier 15 décalé en position d'éjection à droite par rapport à la bande du convoyeur 5.

À l'état non couplé, l'élément magnétique télescopique 191 est escamoté dans l'embase annulaire, et un écart est présent entre ledit élément magnétique télescopique 191 et l'électroaimant 19 du chariot 9 qui peut alors passer aisément au-dessus. À l'état couplé, l'élément magnétique télescopique 191 dépasse de l'embase annulaire 193, et vient au contact de l'électroaimant 19 du chariot 9.

Si la pièce 10 ne doit pas être acheminée vers l'un des conteneurs 20 associés à l'étrier 15 considéré, elle passe sous ledit étrier 15 qui n'est pas mis en mouvement, pour continuer soit vers l'étrier 15 suivant soit vers une sortie 23 (voir figure 1) située à l'extrémité aval du convoyeur à bande 5 à l'opposé de l'entrée 3, où se trouve un réceptacle 20 terminal.

La sortie 23 et le réceptacle terminal 20 peuvent notamment former un récupérateur d'échantillons pour évaluation des pièces 10, dans lequel une pièce 10 par série d'un nombre prédéterminé est réceptionnée, en particulier pour subir des tests.

Notamment, une pièce 10 pour chaque réceptacle 20 peut être prélevée au niveau du récupérateur d'échantillons de la sortie 23. Ainsi, si l'une des pièces 10 d'un échantillon présente un défaut dû à un mauvais réglage de la machine-outil, le lot de pièces 10 du réceptacle 20 correspondant (ainsi que le lot du réceptacle 20 précédent et/ou suivant) peut être écarté ou examiné plus en détail pour écarter les pièces 10 de qualité insuffisante.

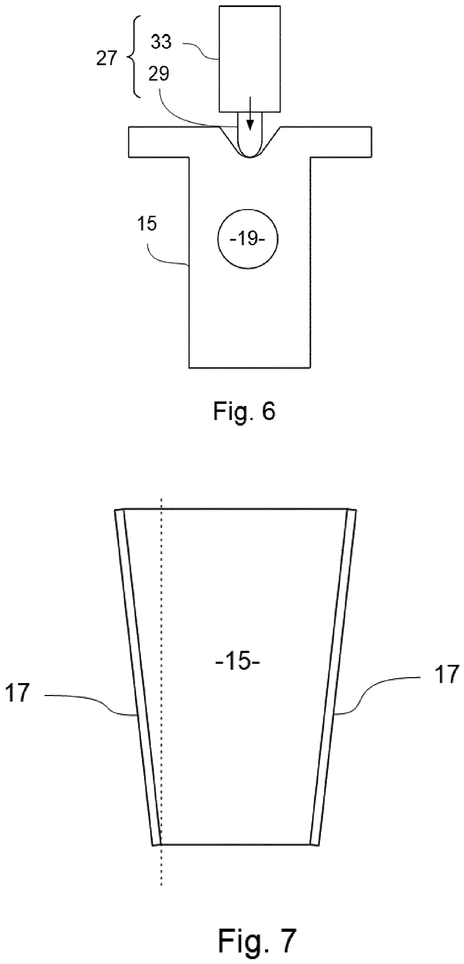

Les figures 5 et 6 illustrent des moyens de centrage des étriers 15. En effet, les étriers 15 doivent présenter une position de repos centrée sur la bande du convoyeur 5 et stable.

Notamment, des moyens élastiques de type ressorts transverses entraînent des oscillations autour de la position centrale qui peuvent nuire à la précision du mouvement induit de l'étrier 15 par le chariot 9. En particulier, si le chariot 9 et l'étrier 15 sont en opposition de phase, le couplage par les électroaimants 19 peut être compromis.

Les étriers 15 présentent une partie supérieure, à laquelle sont attachées les parois latérales 17, sensiblement plane, par exemple une embase métallique.

La partie supérieure des étriers 15 présente un retrait 25 en forme de V, triangulaire à fond arrondi.

Des moyens de centrage 27 sont prévus pour entrer en prise avec le retrait 25. En figure 5, les moyens de centrage 27 sont réalisés sous forme d'un doigt 29 situé au bout d'un ressort 31, qui entre en prise avec le retrait 25 lorsque l'étrier 15 est en position centrale de repos. La position centrale est alors stabilisée avec peu voire pas d'oscillations des étriers 15.

En figure 6, le ressort 31 est remplacé par un détecteur piston 33 qui pousse lui aussi le doigt 29 élastiquement contre l'étrier 15. Lorsque le doigt 29 est en prise avec le retrait 25, le détecteur envoie un signal à l'unité de contrôle pour lui signifier que l'étrier 15 est bien dans la position centrale de repos.

Le chariot 9 peut bien sûr lui aussi présenter des moyens de centrage 27 comparables ou identiques, avec retrait 25 et un détecteur piston 33 ou un ressort 31.

Les moyens de centrage 27 permettent de lever les incertitudes de position du chariot 9 et des étriers 15 pour déclencher leur couplage magnétique, notamment par exemple du fait du jeu de la came 13.

La figure 7 est une vue de dessous d'un étrier 15. On peut notamment voir en figure 7 que les parois latérales 17 sont inclinées entre elles et par rapport à la direction longitudinale. Notamment les parois latérales 17 présentent un angle compris entre 5 et 15° par rapport à l'axe longitudinal, et se rapprochent dans le sens de progression de la bande du convoyeur 5 et des pièces 10.

Ainsi, les pièces 10 sont recentrées sur la bande du convoyeur 15 lorsqu'elles passent à travers un étrier 15, et risquent moins de se coincer contre l'arête amont des parois latérales 17 de l'étrier 15 suivant.

Le séparateur 1 selon l'invention permet une répartition rapide et fiable des pièces 10 en lots dans des réceptacles 20 en sortie d'une machine-outil.

L'éjecteur 7 à étriers 15, avec l'éjection possible des deux côtés du convoyeur à bande 5 correspondant à des réceptacles 20 différents, est en outre longitudinalement compact.

Le couplage par les électroaimants 19 permet d'utiliser seulement une alimentation électrique, sans apport d'air pressurisé, comme dans le cas d'actionneurs mécaniques. En outre, avec le chariot 9 oscillant en continu ou presqu'en continu, avec les étriers 15 sélectivement couplés ou non, les chocs et dommages dus à l'inertie des composants (chariot 9, came 13 etc.) lorsqu'une direction d'actionnement doit être inversée, sont réduits.

## Revendications

1. Séparateur de pièces configuré pour réceptionner et séparer des pièces (10) en sortie d'une machine-outil, comprenant :
- un convoyeur à bande (5), sur lequel sont réceptionnées les pièces (10) en sortie de la machine-outil,
- au moins deux emplacements pour des réceptacles (20) dans lesquels sont destinées à être réparties les pièces (10) réceptionnées,
**caractérisé en ce qu'**il comporte au moins un éjecteur (7), comportant :
* au moins un étrier (15) avec deux parois latérales (17) sensiblement longitudinales et perpendiculaires au convoyeur à bande (5),
* des actionneurs (9, 11, 13, 19), configurés pour translater l'étrier (15) transversalement entre une position de repos centrale, dans laquelle les parois latérales (17) de l'étrier (15) sont situées de part et d'autre de la bande du convoyeur (5), et deux positions d'éjection, dans lesquelles l'étrier (15) est situé latéralement hors de l'aplomb de la bande du convoyeur (5), de sorte à entraîner au moyen de ses parois latérales (17) une pièce (10) lors de sa translation entre la position de repos et une position d'éjection, et à éjecter la pièce (10) sur le côté de la bande du convoyeur (5),
les pièces (10) éjectées d'un côté de la bande du convoyeur (5) pouvant être collectées dans l'un des réceptacles (20), les pièces (10) éjectées de l'autre côté de la bande du convoyeur (5) pouvant être collectées dans l'autre réceptacle (20).

2. Séparateur selon la revendication 1, **caractérisé en ce qu'**il comporte une pluralité d'étriers (15), disposés en série le long de la bande du convoyeur (5), chaque étrier (15) pouvant être associé à une paire de réceptacles (20) différents.

3. Séparateur selon la revendication 2, **caractérisé en ce que** les actionneurs comportent :
un chariot (9), mis en mouvement de translation transverse par un moteur électrique (11),
une pluralité d'électroaimants (19) portés par le chariot (9), un électroaimant (19) par étrier (15),
une unité de contrôle, configurée pour alimenter sélectivement les différents électroaimants (19),
chaque électroaimant (19) passant, lors d'une translation du chariot (9), au-dessus d'un étrier (15),
et **en ce que** les étriers (15) comportent chacun, sur leur extrémité supérieure, un organe magnétique (19) configuré pour interagir avec l'électroaimant (19) du chariot (9) passant au-dessus de l'étrier (15) lorsque celui-ci est alimenté.

4. Séparateur selon la revendication 3, **caractérisé en ce que** le chariot (9) est mis en mouvement au moyen d'une came 13), mise en rotation au moyen du moteur (11), présentant un sillon périphérique, et le chariot comportant un doigt (91), entrant en prise avec le sillon périphérique, et des rails (12), limitant le mouvement du chariot (9) à une translation transverse.

5. Séparateur selon la revendication 3 ou 4, **caractérisé en ce qu'**il comporte au moins un détecteur (21) de pièce (10) situé au niveau de la bande du convoyeur (5), en amont d'un des étriers (15).

6. Séparateur selon l'une des revendications 3 à 5, **caractérisé en ce que** le chariot (9) ou les étriers (15) comporte des moyens de centrage (27), configurés pour entrer en prise avec les étriers (15) ou le chariot (9) lorsqu'ils sont en position de repos.

7. Séparateur selon la revendication précédente, **caractérisé en ce que** les moyens de centrage (27) comportent des détecteurs pistons (33), qui portent un doigt (29) élastiquement contraint, entrant en prise avec un retrait (25) des étriers (15) ou du chariot (9) lorsqu'ils sont en position de repos.

8. Séparateur selon la revendication 6 ou 7, **caractérisé en ce que** les moyens de centrage (27) comportent des doigts (29) élastiquement contraints par des ressorts (31), qui entrent en prise avec un retrait (25) des étriers (15) ou du chariot (9) lorsqu'ils sont en position de repos.

9. Séparateur selon l'une des revendications précédentes, **caractérisé en ce que** les parois latérales (17) des étriers (15) comportent une surface de contact avec les pièces (10) en matériau polymère.

10. Séparateur selon la revendication précédente, **caractérisé en ce que** les parois latérales (17) des étriers sont réalisées sous forme de plaque à base d'un matériau polymère, attachées de façon interchangeable à une embase des étriers (15).

11. Séparateur selon l'une des revendications précédentes, **caractérisé en ce que** les parois latérales (17) des étriers (15) sont disposées inclinées par rapport à la direction longitudinale, avec un angle compris entre 1 et 10°, plus particulièrement entre 3 et 5°, et se rapprochant dans le sens de progression de la bande du convoyeur (5), de sorte à recentrer une pièce (10) passant à travers l'étrier (15).

12. Séparateur selon l'une des revendications précédentes, **caractérisé en ce qu'**il comporte, à l'extrémité aval du convoyeur à bande (5), une sortie (23) vers au moins un réceptacle (20) terminal.

13. Séparateur selon la revendication précédente, **caractérisé en ce que** le réceptacle (20) terminal est un récupérateur d'échantillons pour évaluation des pièces (10), configuré pour récupérer une pièce (10) par lot, chaque lot de pièces (10) correspondant à un des autres réceptacles (20) associés aux étriers (15) est réceptionnée, en particulier pour subir des tests de qualité.

## Patentansprüche

1. Werkstück-Trennvorrichtung, die zum Aufnehmen und Trennen von Werkstücken (10) konfiguriert ist, die von einer Werkzeugmaschine ausgegeben werden, umfassend:
- ein Förderband (5), auf dem die Werkstücke (10), die aus der Werkzeugmaschine kommen, aufgenommen werden,
- mindestens zwei Stellflächen für Behälter (20), in die die aufgenommenen Werkstücke (10) hinein verteilt werden sollen,
**dadurch gekennzeichnet, dass** sie mindestens einen Auswerfer (7) umfasst, umfassend:
* mindestens einen Steg (15) mit zwei Seitenwänden (17), die im Wesentlichen in Längsrichtung und senkrecht zum Förderband (5) verlaufen,
* Stellglieder (9, 11, 13, 19), die so konfiguriert sind, dass sie den Steg (15) quer verlagern zwischen einer mittigen Ruheposition, in der sich die Seitenwände (17) des Steges (15) auf beiden Seiten des Bandes des Förderers (5) befinden, und zwei Auswurfpositionen, in denen sich der Steg (15) seitlich außerhalb der Lotrechten des Bandes des Förderers (5) befindet, so dass er mittels seiner Seitenwände (17) ein Werkstück (10) bei seiner Translation zwischen der Ruheposition und einer Auswurfposition mitnimmt und das Werkstück (10) auf die Seite des Bandes des Förderers (5) auswirft, wobei die auf einer Seite des Bandes des Förderers (5) ausgeworfenen Werkstücke (10) in einem der Behälter (20) gesammelt werden können,
wobei die auf der anderen Seite des Bandes des Förderers (5) ausgeworfenen Werkstücke (10) in dem anderen Behälter (20) gesammelt werden können.

2. Trennvorrichtung nach Anspruch 1, **dadurch gekennzeichnet, dass** sie eine Vielzahl von Stegen (15) umfasst, die in Reihe entlang des Bandes des Förderers (5) angeordnet sind, wobei jeder Steg (15) mit einem Paar verschiedener Behälter (20) verbunden werden kann.

3. Trennvorrichtung nach Anspruch 2, **dadurch gekennzeichnet, dass** die Stellglieder umfassen:
einen Schlitten (9), der von einem Elektromotor (11) in eine Quertranslationsbewegung versetzt wird,
eine Vielzahl von Elektromagneten (19), die vom Schlitten (9) getragen werden, mit einem Elektromagneten (19) pro Steg (15),
eine Steuereinheit, die so konfiguriert ist, dass sie die verschiedenen Elektromagneten (19) wahlweise mit Strom versorgt,
wobei sich jeder Elektromagnet (19) bei einer Translation des Schlittens (9) über einen Steg (15) hinweg bewegt,
und dass die Stege (15) jeweils an ihrem oberen Ende ein magnetisches Organ (19) umfassen, das so konfiguriert ist, dass es mit dem Elektromagneten (19) des Schlittens (9), der sich über den Steg (15) hinweg bewegt, interagiert, wenn dieser mit Strom versorgt wird.

4. Trennvorrichtung nach Anspruch 3, **dadurch gekennzeichnet, dass** der Schlitten (9) mittels einer Nocke (13) in Bewegung gesetzt wird, die mittels des Motors (11) in Drehung versetzt wird, eine umlaufende Rille aufweist und der Schlitten einen Finger (91), der mit der umlaufenden Rille in Eingriff kommt, und Schienen (12) umfasst, die die Bewegung des Schlittens (9) auf eine Quertranslation beschränken.

5. Trennvorrichtung nach Anspruch 3 oder 4, **dadurch gekennzeichnet, dass** sie mindestens einen Detektor (21) für Werkstücke (10) umfasst, der sich auf Höhe des Bandes des Förderers (5) stromaufwärts von einem der Stege (15) befindet.

6. Trennvorrichtung nach einem der Ansprüche 3 bis 5, **dadurch gekennzeichnet, dass** der Schlitten (9) oder die Stege (15) Zentriermittel (27) umfassen, die so konfiguriert sind, dass sie mit den Stegen (15) oder dem Schlitten (9) in Eingriff kommen, wenn sie sich in Ruhestellung befinden.

7. Trennvorrichtung nach dem vorstehenden Anspruch, **dadurch gekennzeichnet, dass** die Zentriermittel (27) Kolbensensoren (33) umfassen, die einen elastisch gespannten Finger (29) tragen, der mit einer Aussparung (25) der Stege (15) oder des Schlittens (9) in Eingriff kommt, wenn sie sich in Ruhestellung befinden.

8. Trennvorrichtung nach Anspruch 6 oder 7, **dadurch gekennzeichnet, dass** die Zentriermittel (27) durch Federn (31) elastisch vorgespannte Finger (29) umfassen, die mit einer Aussparung (25) der Stege (15) oder des Schlittens (9) in Eingriff kommen, wenn sie sich in Ruhestellung befinden.

9. Trennvorrichtung nach einem der vorstehenden Ansprüche, **dadurch gekennzeichnet, dass** die Seitenwände (17) der Stege (15) eine mit den Werkstücken (10) in Kontakt stehende Fläche aus Polymermaterial umfassen.

10. Trennvorrichtung nach dem vorstehenden Anspruch, **dadurch gekennzeichnet, dass** die Seitenwände (17) der Stege als Platte aus einem Polymermaterial ausgeführt sind, die austauschbar an einem Ansatz der Stege (15) befestigt sind.

11. Trennvorrichtung nach einem der vorstehenden Ansprüche, **dadurch gekennzeichnet, dass** die Seitenwände (17) der Stege (15) in Bezug auf die Längsrichtung mit einem Winkel zwischen 1 und 10°, insbesondere zwischen 3 und 5°, geneigt angeordnet sind und sich in der Laufrichtung des Bandes des Förderers (5) annähern, so dass ein durch den Steg (15) laufendes Werkstück (10) neu zentriert wird.

12. Trennvorrichtung nach einem der vorstehenden Ansprüche, **dadurch gekennzeichnet, dass** sie am stromabwärtigen Ende des Förderbandes (5) einen Auslass (23) zu mindestens einem Endbehälter (20) umfasst.

13. Trennvorrichtung nach dem vorstehenden Anspruch, **dadurch gekennzeichnet, dass** der Endbehälter (20) ein Probensammler zur Beurteilung von Werkstücken (10) ist, der so konfiguriert ist, dass er ein Werkstück (10) pro Los zurückbehält, wobei jedes Los von Werkstücken (10), das einem der anderen Behälter (20) entspricht, die den Stegen (15) zugeordnet sind, insbesondere zur Durchführung von Qualitätsprüfungen aufgenommen wird.

## Claims

1. A pieces separator configured to receive and separate pieces (10) at the output of a machine tool, comprising:
- a belt conveyor (5), on which the pieces (10) are received at the outlet of the machine tool,
- at least two locations for receptacles (20) in which the received pieces (10) are intended to be distributed,
**characterised in that** it comprises at least one ejector (7), comprising:
* at least one bracket (15) with two side walls (17) substantially longitudinal and perpendicular to the belt conveyor (5),
* actuators (9, 11, 13, 19), configured to translate the bracket (15) transversely between a central rest position, in which the lateral walls (17) of the bracket (15) are located on either side of the belt of the conveyor (5), and two ejection positions, in which the bracket (15) is located laterally out of plumb of the belt of the conveyor (5), so as to drive by means of its lateral walls (17) a piece (10) during its translation between the rest position and an ejection position, and to eject the piece (10) on the side of the belt of the conveyor (5), the pieces (10) ejected from one side of the belt of the conveyor (5) being able to be collected in one of the receptacles (20),
the pieces (10) ejected from the other side of the conveyor belt (5) being able to be collected in the other receptacle (20).

2. The separator according to claim 1, **characterised in that** it comprises a plurality of brackets (15), arranged in series along the belt of the conveyor (5), each bracket (15) being able to be associated with a pair of different receptacles (20).

3. The separator according to claim 2, **characterised in that** the actuators comprise:
a carriage (9), moved in transverse translation by an electric motor (11),
a plurality of electromagnets (19) carried by the carriage (9), one electromagnet (19) per bracket (15),
a control unit, configured to selectively power the different electromagnets (19),
each electromagnet (19) passing, during a translation of the carriage (9), above a bracket (15),
and **in that** the brackets (15) each comprise, on their upper end, a magnetic member (19) configured to interact with the electromagnet (19) of the carriage (9) passing over the bracket (15) when the latter is powered.

4. The separator according to claim 3, **characterised in that** the carriage (9) is moved by means of a cam (13), rotated by means of the motor (11), having a peripheral groove, and the carriage comprising a finger (91), engaging with the peripheral groove, and rails (12), limiting the movement of the carriage (9) to a transverse translation.

5. The separator according to claim 3 or 4, **characterised in that** it comprises at least one detector (21) of the piece (10) located at the belt of the conveyor (5), upstream of one of the brackets (15).

6. The separator according to any one of claims 3 to 5, **characterised in that** the carriage (9) or the brackets (15) comprises centring means (27), configured to engage with the brackets (15) or the carriage (9) when they are in the rest position.

7. The separator according to the preceding claim, **characterised in that** the centring means (27) comprise piston detectors (33), which carry an elastically stressed finger (29), engaging with a recess (25) of the brackets (15) or the carriage (9) when they are in the rest position.

8. The separator according to claim 6 or 7, **characterised in that** the centring means (27) comprise fingers (29) elastically stressed by springs (31), which engage with a recess (25) of the brackets (15) or the carriage (9) when they are in the rest position.

9. The separator according to any one of the preceding claims, **characterised in that** the side walls (17) of the brackets (15) comprise a surface for a contact with the pieces (10) made of polymeric material.

10. The separator according to the preceding claim, **characterised in that** the side walls (17) of the brackets are made in the form of a plate based on a polymer material, attached interchangeably to a base of the brackets (15).

11. The separator according to any one of the preceding claims, **characterised in that** the side walls (17) of the brackets (15) are arranged inclined with respect to the longitudinal direction, at an angle of between 1 and 10°, more particularly between 3 and 5°, and approaching each other in the direction of advance of the belt of the conveyor (5), so as to redirect a piece (10) passing through the bracket (15).

12. The separator according to any one of the preceding claims, **characterised in that** it comprises, at the downstream end of the belt conveyor (5), an outlet (23) to at least one terminal receptacle (20).

13. The separator according to the preceding claim, **characterised in that** the end receptacle (20) is a sample recuperator for evaluating the pieces (10), configured to recover a piece (10) per batch, each batch of pieces (10) corresponding to one of the other receptacles (20) associated with the brackets (15) being received in particular to undergo quality tests.
